# EUROPÄISCHE PATENTSCHRIFT

(11) **EP 3 237 745 B1**
(45) Veröffentlichungstag und Bekanntmachung des Hinweises auf die Patenterteilung: **20.02.2019**
(21) Anmeldenummer: 15816431.9
(22) Anmeldetag: 16.12.2015
(51) Int. Cl.: F02M 37/08, F02D 41/30, H02K 11/38

(54) **FÖRDERVORRICHTUNG ZUM BEFÖRDERN UND ZUM ERWÄRMEN EINES MEDIUMS**
DEVICE FOR FEEDING FOR THE CONVEYING AND FOR HEATING A MEDIUM
DISPOSITIF D'ALIMENTATION POUR TRANSPORTER ET DESTINÉS À CHAUFFER UN MILIEU

(30) Priorität: 22.12.2014 DE 102014226835
(43) Veröffentlichungstag der Anmeldung: 01.11.2017
(73) Patentinhaber: Continental Automotive GmbH, 30165 Hannover (DE)
(72) Erfinder: GRAF, Rolf, 61479 Glashütten (DE)
(86) Internationale Anmeldenummer: PCT/EP2015/079920
(87) Internationale Veröffentlichungsnummer: WO 2016/102257

(56) Entgegenhaltungen:
- EP-A1- 0 087 727
- DE-A1- 3 639 719
- US-A1- 2010 299 052
- US-B2- 8 714 942

## Beschreibung

Fördervorrichtung zum Befördern und zum Erwärmen eines Mediums Die Erfindung betrifft eine Fördervorrichtung zum Befördern eines Mediums und zum Erwärmen des zu befördernden Mediums, ein Fahrzeug, ein Verfahren, ein Programmelement und ein computerlesbares Medium.

Üblicherweise können typische Kraftstoffpumpen für Diesel ein Pumpwerk besitzen, welches nach dem Verdrängerprinzip arbeitet. Ein Beispiel hierfür ist das sogenannte Gerotorpumpwerk. Ferner können auch Schrauben- oder Rollenzellenpumpwerke für Kraftstoffpumpen eingesetzt werden. Ebenfalls können auch Harnstofflösungspumpen, welche zur Abgasnachbehandlung eingesetzt werden, ein Pumpwerk besitzen, welches nach dem Verdrängerprinzip arbeitet. Beim Betrieb dieser Pumpen können abhängig von Druck und Viskosität des geförderten Mediums verschiedene Betriebszustände auftreten. Da ein Pumpwerk, welches nach dem Verdrängerprinzip arbeitet, eine hohe hydraulische Steifheit aufweisen kann, kann sich eine Änderung in der Viskosität oder des Drucks des geförderten Mediums direkt auf das notwendige Drehmoment zum Antrieb des Pumpwerks auswirken. Die US 2010/0299052 Albeschreibt ein Verfahren zum Starten eines Motors, bei dem eine Kraftstoffförderpumpe eine Spule in einem magnetischen Kreis aufweist. Dadurch, dass der Spule aufeinanderfolgende, kurze Stromimpulse bereitgestellt werden, wird ein Wirbelstromheizen verursacht.

Dieselkraftstoff hat üblicherweise die Eigenschaft, dass bei Unterschreitung einer bestimmten Temperatur Paraffine als Flocken im Kraftstoff ausgeschieden werden können. Wird die Temperatur des Dieselkraftstoffs also gering genug, so kann dieser Mechanismus zum Versulzen und zu einer zunehmenden Verfestigung des Kraftstoffs führen. Die Viskosität des Dieselkraftstoffs kann hierbei stark ansteigen und es können nicht- oder rheolineare Viskositätsverhalten auftreten. Ab einer gewissen Veränderung der Viskosität kann wegen der genannten Gründe der normale Pumpenlauf behindert werden bzw. unmöglich werden, was sich im Falle einer mit einem elektrisch kommutierten Elektromotor angetriebenen Pumpe in wiederkehrenden Fehlstarts äußern kann. Die gleichen Mechanismen können prinzipiell auch für die Pumpen für Harnstofflösungen gelten, die für die Abgasnachbehandlung von Dieselfahrzeugen in den Abgasstrang dosiert werden. Die in Kraftfahrzeugen eingesetzten Harnstofflösungen können bei Temperaturen von etwa -8 bis -11°C gefrieren. Für die Beförderung von Dieselkraftstoff und von Harnlösungen kann es notwendig sein, eine hohe Verfügbarkeit des Fahrzeugs bzw. eine korrekte Abgasnachbehandlung auch bei großer Kälte sicherzustellen.

Die Aufgabe der Erfindung kann darin gesehen werden, die Zuverlässigkeit von Pumpen in Fahrzeugen zu erhöhen.

Die Aufgabe wird gelöst durch die Gegenstände der unabhängigen Ansprüche. Weiterbildungen und Ausführungsformen sind der folgenden Beschreibung, den Figuren und den abhängigen Ansprüchen zu entnehmen.

Ein erster Aspekt der Erfindung betrifft eine Fördervorrichtung zum Befördern eines Mediums und zum Erwärmen des zu befördernden Mediums, die eine Fahrzeugpumpe, einen Elektromotor zum Antreiben der Fahrzeugpumpe und eine Steuereinheit zum Steuern des Elektromotors aufweist. Ferner weist der Elektromotor zumindest eine Leiterwickelung auf. Außerdem ist die Steuereinheit ausgeführt, einen ersten elektrischen Wechselstrom mit einer ersten Frequenz in der zumindest einen Leiterwickelung zu erzeugen, wobei durch den in der zumindest einen Leiterwickelung erzeugten ersten elektrischen Wechselstrom in einem Bauteil der Fördervorrichtung zum Erwärmen des Mediums Wirbelströme induziert werden. Darunter kann verstanden werden, dass die Steuereinheit dazu ausgeführt ist, einen ersten elektrischen Wechselstrom mit einer ersten Frequenz derart in der zumindest einen Leiterwickelung zu erzeugen, dass in einem Bauteil der Fördervorrichtung Wirbelströme induzierbar sind.

Mit anderen Worten kann eine Idee der vorliegenden Erfindung darin bestehen, dass nicht nur die Wickelungen des Elektromotors erwärmt werden, sondern auch andere Komponenten der Fördervorrichtung, beispielsweise das Eisen die Blechpakete des gesamten Elektromotors, zum Beispiel der Stator und/oder gegebenenfalls der Rotor des Elektromotors. Dies kann durch eine Einprägung hochfrequenter Ströme in die Leiterwickelung des Elektromotors erfolgen. Um das Bauteil der Fördervorrichtung zu erwärmen, kann die Leiterwickelung mit Wechselströmen höherer Frequenz beaufschlagt werden. Hierdurch können sich hochfrequente Magnetfelder im Bauteil ausbilden, die zu entsprechenden Wirbelströmen im Bauteil und zu einer entsprechenden Wärmeentwicklung führen können. Die erforderlichen Wechselströme können im Vergleich mit einer Gleichstrombeheizung relativ klein sein, da die Erwärmung des Bauteils durch Ummagnetisierungsverluste im Bauteil selbst erzeugt werden können und nicht durch den Ohmschen Widerstand der Leiterwickelung erzeugt werden müssen. Damit können eventuelle Steckkontakte von Anschlusssteckern und eine eventuelle Endstufe der Steuereinheit kleiner und kostengünstiger ausgelegt werden. Ferner kann die auf diese Weise ohne Schäden in die Pumpe eintragbare elektrische Leistung deutlich höher sein als bei der Erwärmung der Wickelung durch Gleichströme. Damit kann das in der Pumpe befindliche Medium schneller verflüssigt werden. Da der Wärmewiderstand der Gesamtpumpe zur Umgebung und zu dem im Pumpeninneren befindlichen Medium im Vergleich zu einer einzelnen Wickelung geringer sein kann, kann auch die Umgebung der Pumpe besser erwärmt werden, wodurch ein gewisser Vorrat an flüssigem Medium erhalten werden kann. Auf diese Weise kann das in der Pumpe befindliche Medium schneller erwärmt werden, wodurch die Zuverlässigkeit der Fördervorrichtung erhöht werden kann.

Dabei kann der Begriff "Fördervorrichtung" im Kontext der vorliegenden Erfindung in einem weiten Sinne verstanden werden. So muss die Fördervorrichtung nicht zwingendermaßen eine einzelne bauliche Einheit sein. Beispielsweise können die Fahrzeugpumpe, der Elektromotor und die Steuereinheit unterschiedliche bauliche Einheiten sein. Die Steuereinheit kann beispielsweise ein Teil der Motorsteuerung sein. Beim zum befördernden Medium kann es sich beispielsweise um Kraftstoff, um Dieselkraftstoff, um Scheibenwasser, um Harnstoff und/oder um Motor- bzw. Getriebeöl handeln. Allgemein kann es sich beim Medium um ein Medium handeln, bei dem an einer gewissen Temperatur mit einer Erstarrung des Mediums zu rechnen ist. Die Fahrzeugpumpe kann verschiedene Pumpenarten bezeichnen. Beispielsweise kann die Fahrzeugpumpe als Strömungspumpe, als Gerotorpumpe, als Schraubenpumpe oder als Rollenzellenpumpe realisiert sein. Das heißt, die vorliegende Erfindung ist auf verschiedene Pumpenarten anwendbar. Im Kontext der vorliegenden Erfindung kann unter einer Fahrzeugpumpe eine Pumpe, welche im Automobilbereich eingesetzt werden kann, verstanden werden. Der Elektromotor kann beispielsweise einen mechanisch kommutierten oder einen elektrisch kommutierten Elektromotor bezeichnen. Im Falle des elektrisch kommutierten Elektromotors kann die Steuereinheit beispielsweise gleichzeitig eine Regeleinheit sein, die zum Antrieb des Elektromotors die Stromzufuhr zum Elektromotor regelt. Die Leiterwickelung des Elektromotors kann beispielsweise am Rotor oder am Stator des Elektromotors angebracht sein. Dies kann davon abhängig sein, wie genau der Elektromotor konstruiert ist. Beispielsweise kann bei einem elektrisch kommutierten Elektromotor die Leiterwickelung am Stator angeordnet sein, wohingegen bei einem mechanisch kommutierten Elektromotor die Leiterwickelung am Rotor angebracht sein kann. Ferner können auch mehrere Leiterwickelungen im Elektromotor angeordnet sein. Unter dem ersten elektrischen Wechselstrom, der in der zumindest einen Leiterwickelung erzeugt wird, kann ein hochfrequenter elektrischer Wechselstrom verstanden werden. Dieser hochfrequente Wechselstrom kann wiederum hochfrequente Magnetfelder im Bauteil der Fördervorrichtung erzeugen. Dieses Bauteil kann beispielsweise ein Eisenbauteil bzw. ein Blechpaket des Elektromotors sein. Zum Beispiel handelt es sich dabei um den Stator oder gegebenenfalls um den Rotor des Elektromotors. Ferner können auch separate Bauteile außerhalb des Elektromotors angebracht sein, welche ausgeführt sind, durch die erzeugten Wirbelströme erwärmt zu werden. Diese Bauteile können speziell für diesen Zweck konstruiert sein.

In modernen Kraftfahrzeugen können Kraftstoff- und/oder Harnstofflösungspumpe typischerweise als Pumpe, welche mit elektrisch kommutierten Elektromotoren angetrieben werden, ausgeführt sein. Die elektronische Steuerung bzw. Regelung des Elektromotors kann ferner eine Blockierung der Pumpe feststellen.

Die Erwärmung kann so lange erfolgen, bis das Medium in der Pumpe und in unmittelbarer Umgebung der Pumpe verflüssigt ist. Dabei kann die Erwärmung von Umgebungsbedingungen abhängen. Ferner kann das Medium erwärmt werden, bis dessen Temperatur einige Grad über dem Erstarrungspunkt des Mediums ist. Dabei kann der Betrag der Erwärmung bzw. die erreichte Temperatur des Mediums von der Zeitdauer des Heizbetriebs abhängig sein.

Der erste elektrische Wechselstrom bzw. die Heizströme können ferner in der gleichen Größenordnung wie die normalen Betriebsströme zum Antrieb des Elektromotors, im Folgenden als zweiter elektrischer Wechselstrom bezeichnet, sein. Damit kann die Dimensionierung der Kontakte und der Leistungselektronik des Elektromotors für die Erzeugung der Heizströme sowie der Betriebsströme gleich bleiben, da hier keine nennenswert höheren Belastungen im Vergleich zum Normalbetrieb auftreten müssen.

Gemäß einer beispielhaften Ausführungsform der Erfindung ist der erste elektrische Wechselstrom derart ausgeführt, dass er ein Magnetfeld im Elektromotor erzeugt, das kein Drehfeld ist. Dabei kann das Magnetfeld durch den ersten elektrischen Wechselstrom in der zumindest einen Leiterwickelung erzeugt werden. Ferner kann unter einem Drehfeld ein Magnetfeld verstanden werden, das sich um eine Rotationsachse dreht. Mit anderen Wortet kann dies bedeuten, dass das durch den ersten Wechselstrom erzeugte Magnetfeld nicht rotiert. Beziehungsweise kann dies bedeuten, dass der erste elektrische Wechselstrom kein Antriebsmoment für den Elektromotor erzeugt. Beispielsweise muss der erste elektrische Wechselstrom nicht in einem Blockmuster angelegt werden. Zum Beispiel kann eine Wechselspannung an eine oder mehrere Leiterwicklungen angelegt werden, die einen Wechselstrom durch diese Leiterwickelung oder Leiterwickelungen treibt. Das im inneren entstehende Feld kann hierbei ein reines Wechselfeld ohne Drehkomponente sein. Der Rotor kann hierbei stehen bzw. muss nicht rotieren. Dadurch, dass in diesem Fall der erste elektrische Wechselstrom kein Antriebsmoment erzeugt, kann die das Medium geheizt werden, ohne dass der Elektromotor angetrieben wird.

Gemäß einer beispielhaften Ausführungsform der Erfindung weist der Elektromotor einen Rotor und einen Stator auf, wobei die zumindest eine Leiterwickelung am Stator angeordnet ist. Durch den in der zumindest einen Leiterwickelung erzeugten ersten elektrischen Wechselstrom werden im Stator des Elektromotors Wirbelströme induziert. Mit anderen Worten, können durch den in der zumindest einen Leiterwickelung erzeugten ersten elektrischen Wechselstrom im Stator des Elektromotors Wirbelströme induzierbar sein.

Dabei kann es sich beispielsweise beim Elektromotor um einen elektrisch kommutierten Elektromotor handeln. In diesem Falle kann die Steuereinheit in der für den elektrisch kommutierten Elektromotor benötigten Elektronik realisiert sein. Auf diese Weise sind keine zusätzlichen Bauteile für die Fördervorrichtung erforderlich, wodurch die erfindungsgemäße Fördervorrichtung einfach zu realisieren ist, einfach nachrüstbar ist und zuverlässiger betrieben werden kann, da durch die geringere Anzahl an Bauteilen die Ausfallswahrscheinlichkeit gesenkt werden kann. Ferner kann die Fördervorrichtung auch kostengünstig hergestellt werden.

Gemäß der Erfindung ist die Steuereinheit weiterhin ausgeführt, zum Antreiben des Elektromotors einen zweiten elektrischen Wechselstrom mit einer zweiten Frequenz in der zumindest einen Leiterwickelung zu erzeugen, wobei der zweite elektrische Wechselstrom ein Drehfeld im Elektromotor erzeugt.

Dabei kann unter einem Drehfeld ein Magnetfeld verstanden werden, welches sich um eine Rotationsachse dreht, beispielsweise um die Antriebsachse des Elektromotors. Mit anderen Worten wird mit dem zweiten elektrischen Wechselstrom ein Antriebsmoment erzeugt. Durch das Bereitstellen der Steuereinheit, die gleichzeitig Ströme zur Heizung und zum Antrieb erzeugt werden, wird eine einfache Lösung bereitgestellt, um das in der Fördervorrichtung befindliche Medium zu befördern und zu erwärmen. Ferner kann diese Fördervorrichtung einfach mit der Heizfunktionalität nachgerüstet werden und kann auch zuverlässiger sein, da keine extra Bauteile erforderlich sind, welche eine höhere Ausfallwahrscheinlichkeit bewirken könnten.

Gemäß einer weiteren beispielhaften Ausführungsform der Erfindung ist die Steuereinheit ausgeführt, den ersten elektrischen Wechselstrom mit der ersten Frequenz, die zwischen 500 Hz und 50 kHz beträgt, in der zumindest einen Leiterwickelung zu erzeugen.

Dabei kann die Frequenz des ersten elektrischen Wechselstroms abhängig vom Design der Fördervorrichtung sein, z. B. von der Blechdicke und gegebenenfalls vom Ansteuermuster mehrerer Leiterwickelungen. Da die Erwärmung durch im Eisen induzierte Wirbelströme entstehen kann, kann der Elektromotor zur Heizung mit Spannungen und Strömen ähnlich dem Normalbetrieb beaufschlagt werden. Für typische Kfz-Pumpen können die Spannung 12V und die Ströme 8 bis 20 A betragen. Die Verluste zur Erwärmung des Mediums können dann durch die vergleichsweise hohen Wirbelströme im Eisenwiderstand entstehen. Es kann sich hierbei um einen Transformatoreffekt, bei dem ein hoher Sekundärstrom ohmsche Verluste erzeugen kann, handeln. Die Primärwicklung kann hierbei nur einen vergleichsweise kleinen Strom führen und kann somit kleine ohmsche Verluste aufweisen. Ferner können zur Heizung Wechselströme beaufschlagt werden, die eine Frequenz aufweisen, welche oberhalb des Hörbereichs ist. Dadurch kann eine Geräuschentwicklung der Fördervorrichtung vermieden werden. Wenn jedoch ein erster Wechselstrom im hörbaren Frequenzbereich erforderlich sein sollte, beispielsweise wegen des Impedanzverlaufs der Wicklungsinduktivität, kann die Frequenz derart gewählt werden, dass die Geräuschentwicklung minimiert wird.

Gemäß einer weiteren beispielhaften Ausführungsform der Erfindung weist die Fördervorrichtung einen Temperatursensor zum Messen einer Temperatur des zu befördernden Mediums auf. Ferner ist die Steuereinheit ausgeführt, den ersten elektrischen Wechselstrom in der zumindest einen Leiterwickelung zu erzeugen, wenn die vom Temperatursensor gemessene Temperatur einen vorgegebenen Temperaturgrenzwert unterschreitet.

Der Temperatursensor kann beispielsweise in der Pumpe oder in einer Zu- bzw. Ableitung der Pumpe angeordnet sein. In diesem Fall kann mit dem Temperatursensor eine Temperatur des beförderten Mediums gemessen werden. Ferner kann der Temperatursensor auch in der Steuereinheit angeordnet sein. Der Temperatursensor kann in diesem Fall die Umgebungstemperatur messen. Außerdem kann der Temperatursensor auch Teil der Elektronik des Elektromotors sein, um die inneren Temperaturen im Gerät zu erfassen. Der Temperaturgrenzwert kann beispielsweise einen Grenzwert bezeichnen, bei dessen Unterschreiten durch die Temperatur des Mediums die Viskosität des Mediums zu groß wird. Wenn eine Blockierung der Pumpe bei gleichzeitig geringer Umgebungstemperatur festgestellt wird, kann die Blockierung durch ein erstarrtes Medium ausgelöst worden sein. Auf diese Weise kann die Fördervorrichtung dann heizen, wenn eine Gefahr einer Blockierung der Fahrzeugpumpe durch eine zu hohe Viskosität des Mediums besteht.

Gemäß einer weiteren beispielhaften Ausführungsform der Erfindung weist die Fördervorrichtung einen Temperatursensor zum Messen einer Temperatur des zu befördernden Mediums auf. Ferner ist die Steuereinheit ausgeführt, eine Blockade des Elektromotors zu detektieren. Außerdem ist die Steuereinheit ausgeführt, den ersten elektrischen Wechselstrom in der zumindest einen Leiterwickelung zu erzeugen, wenn die Steuereinheit die Blockade des Elektromotors detektiert und die vom Temperatursensor gemessene Temperatur des zu befördernden Mediums den vorgegebenen Temperaturgrenzwert unterschreitet.

Auf diese Weise kann bei einer Blockade der Fahrzeugpumpe das Medium in der Fahrzeugpumpe automatisch wieder erwärmt werden, wodurch ein normaler Betrieb der Fahrzeugpumpe schnell wiederhergestellt werden kann. Ferner kann das Erwärmen des Mediums auch vor dem Benutzen der Fahrzeugpumpe erfolgen, wenn beispielsweise das Medium in der Fahrzeugpumpe eine tiefere Temperatur aufweist.

Ein zweiter Aspekt der Erfindung betrifft ein Fahrzeug mit einer Fördervorrichtung, welche im Kontext der vorliegenden Erfindung beschrieben ist, wobei die Fahrzeugpumpe eine Kraftstoffpumpe zum Befördern von Kraftstoff für einen Verbrennungsmotor oder eine Harnstofflösungspumpe ist.

Da es sich um eine Fördervorrichtung handelt, welche im Kontext der vorliegenden Erfindung beschrieben ist, sind Merkmale und Vorteile, welche im Zusammenhang mit der Fördervorrichtung genannt werden, auch auf das Fahrzeug anwendbar. Das Fahrzeug kann beispielsweise ein Personenkraftfahrzeug oder ein Lastkraftfahrzeug sein, welches durch einen Verbrennungsmotor angetrieben wird. Ferner kann das Fahrzeug auch mit einem Hybridantrieb ausgestattet sein.

Ein dritter Aspekt der Erfindung betrifft ein Verfahren zum Erwärmen eines zu befördernden Mediums mit einer Fördervorrichtung, welche eine mit einem Elektromotor angetriebene Fahrzeugpumpe zum Befördern des Mediums aufweist. Dabei weist das Verfahren den Schritt des Erzeugens eines ersten elektrischen Wechselstroms mit einer ersten Frequenz in zumindest einer Leiterwickelung des Elektromotors auf. Durch den in der zumindest einen Leiterwickelung erzeugten ersten elektrischen Wechselstrom werden Wirbelströme in einem Bauteil der Fördervorrichtung induziert, wodurch das Medium erwärmt wird.

Dieses Verfahren kann beispielsweise in einer Steuereinheit einer im Kontext der vorliegenden Erfindung beschriebenen Fördervorrichtung ausgeführt werden. Daher können Merkmale und Vorteile, die im Zusammenhang mit der Fördervorrichtung genannt werden, auch auf das Verfahren angewendet werden. Ferner können die Schritte des Verfahrens in verschiedenen Reihenfolgen und/oder parallel durchgeführt werden.

Ein vierter Aspekt der Erfindung betrifft ein Programmelement, das, wenn es von einer Steuereinheit einer Fördervorrichtung ausgeführt wird, die Steuereinheit anleitet, ein Verfahren, welches oben und im Folgenden beschrieben ist, durchzuführen.

Das Programmelement kann ein Teil eines Computerprogramms sein. Ferner kann das Programmelement auch selbst ein selbstständiges Computerprogramm sein. Beispielsweise kann das Programmelement als Update ein bereits bestehendes Computerprogramm zum Ausführen des erfindungsgemäßen Verfahrens befähigen.

Ein fünfter Aspekt der Erfindung betrifft ein computerlesbares Medium, auf dem ein Programmelement gespeichert ist, das, wenn es von einer Steuereinheit einer Fördervorrichtung ausgeführt wird, die Steuereinheit anleitet, ein im Kontext der Erfindung beschriebenes Verfahren durchzuführen.

Das computerlesbare Medium kann als Speichermedium, beispielsweise als USB-Stick, als CD, als DVD, als Festplatte oder als sonstiges Speichermedium angesehen werden. Ferner kann das computerlesbare Medium auch als Mikrochip ausgeführt sein, der eine Steuerungseinheit befähigt, das erfindungsgemäße Verfahren durchzuführen.

Die beschriebenen Ausführungsformen betreffen gleichermaßen eine Fördervorrichtung, ein Fahrzeug, ein Verfahren, ein Programmelement und ein computerlesbares Medium, obwohl einzelne Ausführungsformen ausschließlich in Bezug zu der Fördervorrichtung, dem Fahrzeug, dem Verfahren, dem Programmelement oder dem computerlesbaren Medium beschrieben werden. Synergetische Effekte können sich aus verschiedenen Kombinationen der Ausführungsformen ergeben, auch wenn diese im Folgenden nicht beschrieben werden.

Weitere Merkmale, Vorteile und Anwendungsmöglichkeiten der Erfindung ergeben sich aus der nachfolgenden Beschreibung der Ausführungsbeispiele und der Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen.
- Fig. 1: zeigt eine Fördervorrichtung gemäß einem Ausführungsbeispiel der Erfindung.
- Fig. 2: zeigt einen Elektromotor gemäß einem Ausführungsbeispiel der Erfindung.
- Fig. 3: zeigt ein Fahrzeug gemäß einem Ausführungsbeispiel der Erfindung.
- Fig. 4: zeigt ein Flussdiagramm eines Verfahrens gemäß einem Ausführungsbeispiel der Erfindung.

Dabei sind die Figuren schematisch und nicht maßstabsgetreu dargestellt.

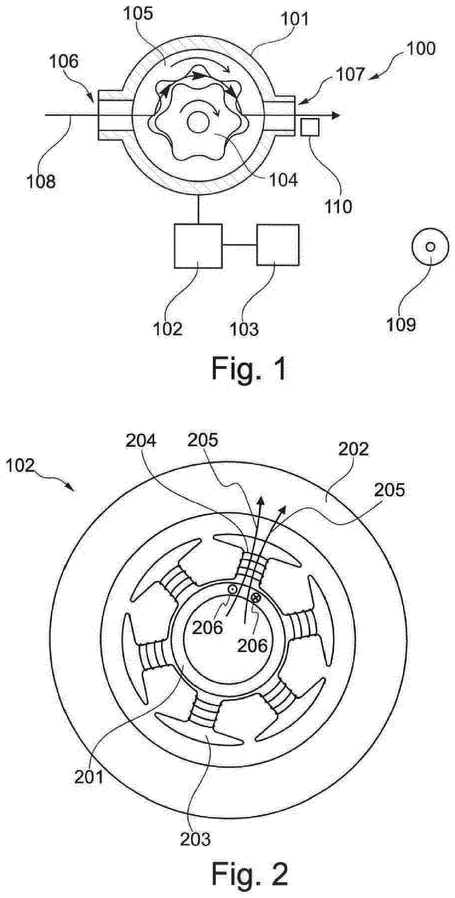

In Fig. 1 ist eine Fördervorrichtung 100 zum Befördern eines Mediums und zum Erwärmen des zu befördernden Mediums gemäß einem Ausführungsbeispiel der Erfindung dargestellt. Die Fördervorrichtung 100 weist eine Fahrzeugpumpe 101, einen Elektromotor 102 zum Antreiben der Fahrzeugpumpe und eine Steuereinheit 103 zum Steuern des Elektromotors auf. Dabei weist der Elektromotor 102 zumindest eine Leiterwickelung auf. In Fig. 2 ist beispielsweise eine Vergrößerung des Elektromotors 102 mit Leiterwickelungen dargestellt. Ferner ist die Steuereinheit 103 ausgeführt, einen ersten elektrischen Wechselstrom mit einer ersten Frequenz in der zumindest einen Leiterwickelung zu erzeugen, wobei durch den in der zumindest einen Leiterwickelung erzeugten ersten elektrischen Wechselstrom in einem Bauteil der Fördervorrichtung zum Erwärmen des Mediums Wirbelströme induziert werden.

Gemäß dem in Fig. 1 gezeigten Ausführungsbeispiel ist die Fahrzeugpumpe 101 als Gerotorpumpe bzw. Zahnringpumpe ausgeführt. Dabei läuft das treibende Zahnrad 104 exzentrisch in der Innenverzahnung 105 der Fahrzeugpumpe. Das Zahnrad 104 wird durch den Elektromotor 102 angetrieben. Durch die Rotation des Zahnrads 104 wird das Medium zwischen den Zahnlücken befördert, wodurch das Medium von einem Einlass 106 der Pumpe 101 zu einem Auslass 107 der Pumpe 101 in Pfeilrichtung 108 transportiert wird. Dabei ist die Gerotorpumpe in diesem Ausführungsbeispiel rein beispielhaft und nicht einschränkend anzusehen. Ferner kann die Erfindung für viele verschiedene Pumpenarten realisiert werden. Ferner weist die Fördervorrichtung 101 einen Temperatursensor 110 zum Messen einer Temperatur des zu befördernden Mediums auf. Der Temperatursensor kann beispielsweise bei einem Auslass 107 der Fahrzeugpumpe 101 angeordnet sein. Ferner kann der Temperatursensor auch innerhalb der Pumpe 101, am Einlass 108 der Pumpe 101 oder an anderen Stellen angeordnet sein. Mittels des Temperatursensors 110 kann die Temperatur des zu befördernden Mediums ermittelt werden, wenn die Temperatur des befördernden Mediums sich unterhalb eines vorgegebenen Grenzwerts befindet, so kann die Steuereinheit 103 den ersten Wechselstrom in der Leiterwickelung des Elektromotors 102 erzeugen.

Ferner ist in Fig. 1 ein Speichermedium 109 dargestellt, auf welchem beispielsweise ein Verfahren, welches von der Steuereinheit durchgeführt wird, gespeichert sein kann. Ferner kann auf der Speichereinheit 109 auch der vorgegebene Temperaturgrenzwert gespeichert sein.

In Fig. 2 ist ein Elektromotor 102 gemäß einem Ausführungsbeispiel der Erfindung dargestellt. In diesem Ausführungsbeispiel ist der Elektromotor 102 als Außenrotormotor dargestellt. Dies ist jedoch rein beispielhaft und nicht einschränkend anzusehen. Der Elektromotor kann genauso gut als Innenrotormotor ausgeführt oder eine andere Konstruktion aufweisen. Der Rotor 201 umfasst in diesem Ausführungsbeispiel sechs Rotorarme 203, welche jeweils eine Leiterwickelung 204 aufweisen. Wie bereits beschrieben ist der Rotor des Elektromotors 202 außerhalb des Stators 201 angeordnet und ist beispielsweise aus einem permanentmagnetischen Material aufgebaut. Wenn in den Leiterwickelungen 204 ein Strom zum Antreiben des Elektromotors erzeugt wird, so veranlassen die in den Leiterwickelungen erzeugten Magnetfelder, dass sich der Rotor 202 um den Stator 201 dreht. Ferner kann in der Leiterwickelung 204 durch eine Steuereinheit des Elektromotors 102 ein erster elektrischer Wechselstrom erzeugt werden. Dieser erste elektrische Wechselstrom bewirkt hochfrequente Magnetfelder 205, welche wiederum Wirbelströme in den Eisenkomponenten bzw. Blechpaketen des Elektromotors 102 induzieren können. Beispielsweise werden Wirbelströme innerhalb des Stators 201 induziert, welche in einer zu den Magnetfeldern 205 im Wesentlichen senkrecht stehenden Ebene angeordnet sind. Diese Wirbelströme sind im Stator 201 durch die Pfeilrichtungen 206 dargestellt. Durch diese Wirbelströme 206 bzw. durch Ummagnetisierungsverluste kann sich der Stator 201 erwärmen. Diese Wärme kann der Stator an das durch die Pumpe 101 beförderte Medium abgeben.

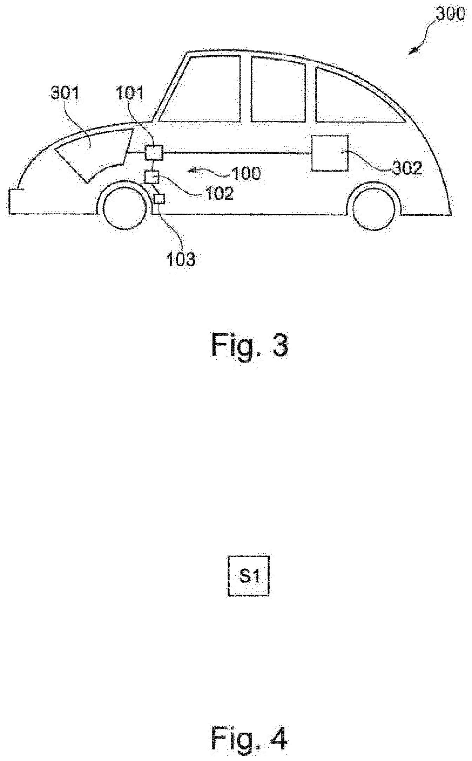

In Fig. 3 ist ein Fahrzeug 300 gemäß einem Ausführungsbeispiel der Erfindung dargestellt. Das Fahrzeug weist einen Verbrennungsmotor 301, einen Kraftstofftank 302 und eine Fördervorrichtung 100 auf, die den Verbrennungsmotor 301 mit Kraftstoff vom Kraftstofftank 302 versorgt. Beispielsweise handelt es sich beim Verbrennungsmotor 301 um einen Dieselmotor. Die Fördervorrichtung 100 beinhaltet eine Fahrzeugpumpe 101, einen Elektromotor 102 zum Antreiben der Pumpe und eine Steuereinheit 103 zum Steuern des Elektromotors 102. Die Steuereinheit 103 kann dabei zum Beispiel eine bauliche Einheit der Fördervorrichtung 100 oder aber auch Teil der Motorsteuerung des Verbrennungsmotors 301 sein. Ferner kann die Steuereinheit 103 auch nachträglich im Fahrzeug nachgerüstet worden sein.

In Fig. 4 ist ein Flussdiagramm für ein Verfahren zum Erwärmen eines zu befördernden Mediums mit einer Fördervorrichtung, welche eine mit einem Elektromotor angetriebene Fahrzeugpumpe zum Befördern des Mediums aufweist, gemäß einem Ausführungsbeispiel der Erfindung dargestellt. Dabei weist das Verfahren den Schritt S1 des Erzeugens eines ersten elektrischen Wechselstroms mit einer ersten Frequenz in zumindest einer Leiterwickelung des Elektromotors auf, wobei durch den in der zumindest einen Leiterwickelung erzeugten ersten elektrischen Wechselstrom Wirbelströme in einem Bauteil der Fördervorrichtung induziert werden, wodurch das Medium erwärmt wird.

Ergänzend sei darauf hinzuweisen, dass "umfassend" oder "aufweisend" keine anderen Elemente ausschließt und "ein" oder "einer" keine Vielzahl ausschließt. Ferner sei darauf hingewiesen, dass Merkmale, die mit Verweis auf eines der obigen Ausführungsbeispiele oder Ausführungsformen beschrieben worden sind, auch in Kombination mit anderen Merkmalen anderer zuvor beschriebener Ausführungsbeispiele oder Ausführungsformen verwendet werden können. Bezugszeichen in den Ansprüchen sind nicht als Einschränkungen anzusehen.

## Patentansprüche

1. Fördervorrichtung (100) zum Befördern eines Mediums und zum Erwärmen des zu befördernden Mediums, die Fördervorrichtung aufweisend:
eine Fahrzeugpumpe (101);
einen Elektromotor (102) zum Antreiben der Fahrzeugpumpe;
eine Steuereinheit (103) zum Steuern des Elektromotors;
wobei der Elektromotor zumindest eine Leiterwickelung (204) aufweist;
wobei die Steuereinheit ausgeführt ist, einen ersten elektrischen Wechselstrom mit einer ersten Frequenz in der zumindest einen Leiterwicklung zu erzeugen; und
wobei durch den in der zumindest einen Leiterwicklung erzeugten ersten elektrischen Wechselstrom in einem Bauteil der Fördervorrichtung zum Erwärmen des Mediums Wirbelströme (206) induziert werden,
**dadurch gekennzeichnet, dass** die Steuereinheit weiterhin ausgeführt ist, gleichzeitig zum ersten elektrischen Wechselstrom zum Antreiben des Elektromotors einen zweiten elektrischen Wechselstrom mit einer zweiten Frequenz in der zumindest einen Leiterwicklung zu erzeugen;
wobei der zweite elektrische Wechselstrom ein Drehfeld im Elektromotor erzeugt.

2. Fördervorrichtung nach Anspruch 1,
wobei der Elektromotor einen Rotor (202) und einen Stator (201) aufweist;
wobei die zumindest eine Leiterwickelung am Stator angeordnet ist; und
wobei durch den in der zumindest einen Leiterwicklung erzeugten ersten elektrischen Wechselstrom im Stator des Elektromotors Wirbelströme induziert werden.

3. Fördervorrichtung nach einem der vorangehenden Ansprüche,
wobei die Steuereinheit ausgeführt ist, den ersten elektrischen Wechselstrom mit der ersten Frequenz, die zwischen 500 Hz und 50 kHz beträgt, in der zumindest einen Leiterwickelung zu erzeugen.

4. Fördervorrichtung nach einem der vorangehenden Ansprüche, die Fördervorrichtung weiterhin aufweisend:
einen Temperatursensor (110) zum Messen einer Temperatur des zu befördernden Mediums;
wobei die Steuereinheit ausgeführt ist, den ersten elektrischen Wechselstrom in der zumindest einen Leiterwickelung zu erzeugen, wenn die vom Temperatursensor gemessene Temperatur des zu befördernden Mediums einen vorgegebenen Temperaturgrenzwert unterschreitet.

5. Fördervorrichtung nach einem der Ansprüche 1 bis 4, die Fördervorrichtung weiterhin aufweisend:
einen Temperatursensor zum Messen einer Temperatur des zu befördernden Mediums;
wobei die Steuereinheit ausgeführt ist, eine Blockade des Elektromotors zu detektieren;
wobei die Steuereinheit ausgeführt ist, den ersten elektrischen Wechselstrom in der zumindest einen Leiterwickelung zu erzeugen, wenn die Steuereinheit die Blockade des Elektromotors detektiert und die vom Temperatursensor gemessene Temperatur des zu befördernden Mediums den vorgegebenen Temperaturgrenzwert unterschreitet.

6. Fahrzeug (300) mit einer Fördervorrichtung (100) nach einem der vorangehenden Ansprüche;
wobei die Fahrzeugpumpe eine Kraftstoffpumpe zum Befördern von Kraftstoff für einen Verbrennungsmotor oder eine Harnstofflösungspumpe ist.

7. Verfahren zum Erwärmen eines zu befördernden Mediums mit einer Fördervorrichtung, welche eine mit einem Elektromotor angetriebene Fahrzeugpumpe zum Befördern des Mediums aufweist, das Verfahren aufweisend den Schritt:
Erzeugen eines ersten elektrischen Wechselstroms mit einer ersten Frequenz in zumindest einer Leiterwicklung des Elektromotors (S1);
wobei durch den in der zumindest einen Leiterwickelung erzeugten ersten elektrischen Wechselstrom Wirbelströme in einem Bauteil der Fördervorrichtung induziert werden, wodurch das Medium erwärmt wird;
Erzeugen eines zweiten elektrischen Wechselstroms mit einer zweiten Frequenz in zumindest einer Leiterwicklung des Elektromotors (S1);
wobei das Erzeugen des zweiten elektrischen Wechselstroms gleichzeitig mit dem Erzeugen des ersten elektrischen Wechselstroms erfolgt; und
wobei durch den in der zumindest einen Leiterwickelung erzeugten zweiten elektrischen Wechselstrom ein Drehfeld in dem Elektromotor zum Antreiben des Elektromotors erzeugt wird.

8. Programmelement, das, wenn es von einer Steuereinheit einer Fördervorrichtung ausgeführt wird, die Steuereinheit anleitet, ein Verfahren nach Anspruch 7 durchzuführen.

9. Computerlesbares Medium (109), auf dem ein Programmelement gespeichert ist, das, wenn es von einer Steuereinheit einer Fördervorrichtung ausgeführt wird, die Steuereinheit anleitet, ein Verfahren nach Anspruch 7 durchzuführen.

## Claims

1. Delivery device (100) for delivering a medium and for heating the medium for delivery, the delivery device having:
a vehicle pump (101);
an electric motor (102) for driving the vehicle pump;
a control unit (103) for controlling the electric motor;
wherein the electric motor has at least one conductor winding (204);
wherein the control unit is designed to generate a first electrical alternating current with a first frequency in the at least one conductor winding; and
wherein, by means of the first electrical alternating current generated in the at least one conductor winding, eddy currents (206) are induced in a component of the delivery device for the purposes of heating the medium,
**characterized in that** the control unit is furthermore designed to generate, simultaneously with the first electrical alternating current, a second electrical alternating current with a second frequency in the at least one conductor winding for the purposes of driving the electric motor;
wherein the second electrical alternating current generates a rotating field in the electric motor.

2. Delivery device according to Claim 1,
wherein the electric motor has a rotor (202) and a stator (201) ;
wherein the at least one conductor winding is arranged on the stator; and
wherein, by means of the first electrical alternating current generated in the at least one conductor winding, eddy currents are induced in the stator of the electric motor.

3. Delivery device according to one of the preceding claims, wherein the control unit is designed to generate the first electrical alternating current in the at least one conductor winding with the first frequency, which amounts to between 500 Hz and 50 kHz.

4. Delivery device according to one of the preceding claims, the delivery device furthermore having:
a temperature sensor (110) for measuring a temperature of the medium for delivery;
wherein the control unit is designed to generate the first electrical alternating current in the at least one conductor winding if the temperature of the medium to be delivered as measured by the temperature sensor differs from a predefined temperature threshold value.

5. Delivery device according to one of Claims 1 to 4, the delivery device furthermore having:
a temperature sensor for measuring a temperature of the medium for delivery;
wherein the control unit is designed to detect a blockage of the electric motor;
wherein the control unit is designed to generate the first electrical alternating current in the at least one conductor winding if the control unit detects the blockage of the electric motor and the temperature of the medium for delivery as measured by the temperature sensor falls below the predefined temperature threshold value.

6. Vehicle (300) having a delivery device (100) according to one of the preceding claims;
wherein the vehicle pump is a fuel pump for delivering fuel for an internal combustion engine, or a urea solution pump.

7. Method for heating a medium for delivery by means of a delivery device, which has a vehicle pump, driven by means of an electric motor, for delivering the medium, the method having the step:
generating a first electrical alternating current with a first frequency in at least one conductor winding of the electric motor (S1);
wherein, by means of the first electrical alternating current generated in the at least one conductor winding, eddy currents are induced in a component of the delivery device, whereby the medium is heated;
generating a second electrical alternating current with a second frequency in at least one conductor winding of the electric motor (S1);
wherein the generation of the second electrical alternating current is performed simultaneously with the generation of the first electrical alternating current; and
wherein a rotating field is generated in the electric motor, for the purposes of driving the electric motor, by means of the second electrical alternating current generated in the at least one conductor winding.

8. Program element which, when executed by a control unit of a delivery device, commands the control unit to carry out a method according to Claim 7.

9. Computer-readable medium (109) on which there is stored a program element which, when executed by a control unit of a delivery device, commands the control unit to carry out a method according to Claim 7.

## Revendications

1. Dispositif de transport (100) destiné à transporter un fluide et à chauffer le fluide à transporter, le dispositif de transport comprenant :
une pompe de véhicule (101) ;
un moteur électrique (102) destiné à entraîner la pompe de véhicule ;
une unité de commande (103) destinée à commander le moteur électrique ;
le moteur électrique possédant au moins un enroulement conducteur (204) ;
l'unité de commande étant conçue pour convertir un premier courant électrique alternatif ayant une première fréquence dans l'au moins un enroulement conducteur ; et
des courants de Foucault (206) étant induits dans un élément structural du dispositif de transport par le premier courant électrique alternatif généré dans l'au moins un enroulement conducteur en vue de chauffer le fluide,
**caractérisé en ce que**
l'unité de commande est en outre conçue pour générer, simultanément avec le premier courant électrique alternatif, un deuxième courant électrique alternatif ayant une deuxième fréquence dans l'au moins un enroulement conducteur en vue d'entraîner le moteur électrique ;
le deuxième courant électrique alternatif générant un champ tournant dans le moteur électrique.

2. Dispositif de transport selon la revendication 1,
le moteur électrique possédant un rotor (202) et un stator (201) ;
l'au moins un enroulement conducteur étant disposé sur le stator ; et
des courants de Foucault étant induits dans le stator du moteur électrique par le premier courant électrique alternatif généré dans l'au moins un enroulement conducteur.

3. Dispositif de transport selon l'une des revendications précédentes,
l'unité de commande étant conçue pour générer le premier courant électrique alternatif dans l'au moins un enroulement conducteur avec une première fréquence qui est comprise entre 500 Hz et 50 kHz.

4. Dispositif de transport selon l'une des revendications précédentes, le dispositif de transport comprenant en outre :
une sonde de température (110) destinée à mesurer une température du fluide à transporter ;
l'unité de commande étant conçue pour générer le premier courant électrique alternatif dans l'au moins un enroulement conducteur lorsque la température du fluide à transporter, mesurée par la sonde de température, devient inférieure à une valeur limite de température prédéfinie.

5. Dispositif de transport selon l'une des revendications 1 à 4, le dispositif de transport comprenant en outre :
une sonde de température destinée à mesurer une température du fluide à transporter ;
l'unité de commande étant conçue pour détecter un blocage du moteur électrique ;
l'unité de commande étant conçue pour générer le premier courant électrique alternatif dans l'au moins un enroulement conducteur lorsque l'unité de commande détecte le blocage du moteur électrique et la température du fluide à transporter, mesurée par la sonde de température, devient inférieure à la valeur limite de température prédéfinie.

6. Véhicule (300) comprenant un dispositif de transport (100) selon l'une des revendications précédentes ;
la pompe de véhicule étant une pompe à carburant destinée à transporter du carburant pour un moteur à combustion interne ou une pompe à solution d'urée.

7. Procédé pour chauffer un fluide à transporter avec un dispositif de transport, lequel possède une pompe de véhicule entraînée par un moteur électrique et destinée à transporter le fluide, le procédé comprenant l'étape suivante :
génération d'un premier courant électrique alternatif ayant une première fréquence dans au moins un enroulement conducteur du moteur électrique (S1) ;
des courants de Foucault étant induits dans un élément structural du dispositif de transport par le premier courant électrique alternatif généré dans l'au moins un enroulement conducteur, par lesquels le fluide est chauffé ;
génération d'un deuxième courant électrique alternatif ayant une deuxième fréquence dans au moins un enroulement conducteur du moteur électrique (S1) ;
la génération du deuxième courant électrique alternatif s'effectuant simultanément avec la génération du premier courant électrique alternatif ; et
un champ tournant étant généré dans le moteur électrique par le deuxième courant électrique alternatif généré dans l'au moins un enroulement conducteur en vue d'entraîner le moteur électrique.

8. Élément de programme qui, lorsqu'il est exécuté par une unité de commande d'un dispositif de transport, amène l'unité de commande à mettre en oeuvre un procédé selon la revendication 7.

9. Support lisible par ordinateur (109), sur lequel est enregistré un élément de programme qui, lorsqu'il est exécuté par une unité de commande d'un dispositif de transport, amène l'unité de commande à mettre en oeuvre un procédé selon la revendication 7.
